# EUROPEAN PATENT APPLICATION

(11) **EP 3 026 573 A1**
(43) Date of publication of application: **01.06.2016**
(21) Application number: 13881423.1
(22) Date of filing: 21.08.2013
(51) Int. Cl.: G06F 17/30

(54) **DATA STORAGE METHOD AND APPARATUS**

(30) Priority: 24.07.2013 CN 201310315361
(71) Applicant: ZTE Corporation, Shenzhen, Guangdong 518057 (CN)
(72) Inventor: WU, Xinyu, Shenzhen Guangdong 518057 (CN); DING, Yan, Shenzhen Guangdong 518057 (CN); WU, Liang, Shenzhen Guangdong 518057 (CN); CHEN, Xiaoqiang, Shenzhen Guangdong 518057 (CN)
(74) Representative: Mozzi, Matteo
(86) International application number: PCT/CN2013/082003
(87) International publication number: WO 2014/161261

(57) **Abstract**

The disclosure discloses a method and device for storing data. In the method, a request message is initiated to a network side device, and network data to be cached are acquired; and one or more cache entity objects are selected for the network data from a cache entity object set, and acquired first-type network data are directly stored into the one or more cache entity objects, or, serialized second-type network data are stored into the one or more cache entity objects. According to the technical solutions provided by the disclosure, dependence on a network can be further reduced, and traffic of a network and electric quantity of mobile terminals can be saved.

## Description

### Technical Field

The disclosure relates to the communications field, and in particular to a method and device for storing data.

### Background

In the related art, no matter for large applications or small applications, flexible caching can greatly alleviate the stress on servers, and can provide convenience for a vast majority of users due to faster user experiences. Applications of mobile terminals belong to the small applications generally, and most (about 99 percents) of the applications do not need to be updated in real time; and data interaction between the mobile terminals and the server is performed as less as possible because of a snail-like mobile network speed, thereby being capable of obtaining better user experiences.

The stress on the data interaction can be greatly alleviated by means of caching. General suitable environments of cache management may include:
(1) applications for providing network services;
(2) data do not need to be updated in real time, and a cache mechanism can be adopted even in case of delay for a few minutes; and
(3) cache expiration time is acceptable, which cannot cause an influence on a product image due to non-timely updating of certain data.

Thus, caching brings advantages as follows:
(1) the stress on the server can be greatly alleviated;
(2) a response speed of a client is greatly increased;
(3) the error probability of data loading of the client is greatly reduced, and the stabilities of the applications are greatly improved; and
(4) off-line browsing can be supported to a certain extent or a technical support can be provided for the off-line browsing.

Currently, two relatively-common cache management methods are a database method and a file method. The database method refers that after a data file is downloaded, relevant information of the data file, such as a Uniform Resource Locator (URL), a path, downloading time and expiration time, is stored in a database. When the data file needs to be downloaded again, the data file can be inquired from the database according to the URL, and if it is inquired that current time does not exceed the expiration time, a local file can be read according to the path, thereby achieving a cache effect. The file method refers that final correction time of the file is obtained by using a File.lastModified() method, and is compared with current time to judge whether the current time exceeds the expiration time, thereby further achieving the cache effect.

However, data cache solutions provided in the related art are overly dependent on remote network service, and traffic of a network and electric quantity of mobile terminals need to be greatly consumed.

### Summary

The embodiments of disclosure provides a method and device for storing data, so as at least to solve the problems that data cache solutions provided in the related art are overly dependent on remote network service and traffic of the network and electric quantity of mobile terminals need to be greatly consumed.

According to one aspect of the disclosure, a method for storing data is provided.

The method for storing data according to the embodiments of the disclosure may include that: initiating a request message to a network side device, and acquiring network data to be cached; and selecting one or more cache entity objects for the network data from a cache entity object set, and directly storing acquired first-type network data into the one or more cache entity objects, or, storing serialized second-type network data into the one or more cache entity objects.

In an example embodiment, before storing the first-type network data into the one or more cache entity objects, the method further comprises: acquiring a size of the first-type network data; judging whether the size of the first-type network data is smaller than or equal to a size of a remaining storage space in a first cache entity object, wherein the first cache entity object has a highest storage priority among the one or more cache entity object; and when the size of the first-type network data is bigger than the size of the remaining storage space in the first cache entity object, deleting part or all of data currently stored in the first cache entity object or transferring part or all of data currently stored in the first cache entity object to another cache entity object or other cache entity objects except for the first cache entity object according to a preset rule, wherein the preset rule comprises one of the followings: a Least Recently Used, LRU, rule, time of data stored in the first cache entity objects.

In an example embodiment, before storing the second-type network data into the one or more cache entity objects, the method further comprises: acquiring a size of the second-type network data; judging whether the size of the second-type network data is smaller than or equal to a size of a remaining storage space in a first cache entity object; and when the size of the second-type network data is bigger than the size of the remaining storage space in the first cache entity object, deleting part or all of data currently stored in the first cache entity object or transferring part or all of data stored in the first cache entity object to another cache entity object or other cache entity objects except for the first cache entity object according to a preset rule" wherein the preset rule comprises one of the followings: an LRU rule, time of data stored in the first cache entity objects.

In an example embodiment, before storing the first-type network data into the one or more cache entity objects or storing the second-type network data into the one or more cache entity objects, the method further comprises: setting storage identifiers for first-type network data or second-type network data, wherein the storage identifiers are used for searching for first-type network data after the first-type network data is stored into the one or more cache entity objects or searching for second-type network data after the second-type network data is stored into the one or more cache entity objects.

In an example embodiment, storing the first-type network data into the one or more cache entity objects or storing the second-type network data into the one or more cache entity objects comprises: judging whether the storage identifiers already exist in the one or more cache entity objects; and when the data with the storage identifiers already exists in the one or more cache entity objects, directly covering data, currently stored in the one or more cache entity objects and corresponding to the storage identifiers, with the first-type network data or the second-type network data, or after the data corresponding to the storage identifiers are called back, covering the data, corresponding to the storage identifiers, with the first-type network data or the second-type network data.

In an example embodiment, setting the storage identifiers for the first-type network data or the second-type network data comprises: traversing all of storage identifiers already existing in the one or more cache entity objects; and determining the storage identifiers set for the first-type network data or the second-type network data according to a traversing result, wherein the set storage identifiers are different from all of the storage identifiers which already exist.

In an example embodiment, the cache entity object set comprises at least one of the following: one or more initially-configured memory cache entity objects; one or more initially-configured file cache entity objects; one or more initially-configured database cache entity objects; and one or more customize extended cache entity objects.

According to the other aspect of the disclosure, a device for storing data is provided.

The device for storing data according to the embodiments of the disclosure may include:
a first acquisition component, configured to initiate a request message to a network side device and acquire network data to be cached; and a storage component, configured to select one or more cache entity objects for the network data from a cache entity object set, and directly store acquired first-type network data into the one or more cache entity objects or store serialized second-type network data into the one or more cache entity objects.

In an example embodiment, the device further comprises: a second acquisition component, configured to acquire a size of the first-type network data; a first judgment component, configured to judge whether the size of the first-type network data is smaller than or equal to a size of a remaining storage space in a first cache entity object, wherein the first cache entity object has a highest storage priority among the one or more cache entity object; and a first processing component, configured to delete, when the size of the first-type network data is bigger than the size of the remaining storage space in the first cache entity object, part or all of data currently stored in the first cache entity object or transfer part or all of the data currently stored in the first cache entity object to another cache entity object or other cache entity objects except for the first cache entity object according to a preset rule, wherein the preset rule comprises one of the followings: a Least Recently Used, LRU, rule, time of data stored in the first cache entity objects.

In an example embodiment, the device further comprises: a third acquisition component, configured to acquire a size of the second-type network data; a second judgment component, configured to judge whether the size of the second-type network data is smaller than or equal to a size of a remaining storage space in a first cache entity object; and a second processing component, configured to delete, when the size of the second-type network data is bigger than the size of the remaining storage space in the first cache entity object, part or all of data currently stored in the first cache entity object or transfer part or all of data stored in the first cache entity object to another cache entity object or other cache entity objects except for the first cache entity object according to a preset rule, wherein the preset rule comprises one of the followings: an LRU rule, time of data stored in the first cache entity objects.

In an example embodiment, the device further comprises: a setting component, configured to set storage identifiers for the first-type network data or the second-type network data, wherein the storage identifiers are configured to search for the first-type network data after the first-type network data is stored into the one or more cache entity objects or search for second-type network data after the second-type network data is stored into the one or more cache entity objects.

In an example embodiment, the storage component comprises: a judgment element, configured to judge whether the storage identifiers already exist in the one or more cache entity objects; and a processing element, configured to directly cover, when the data with the storage identifiers already exists in the one or more cache entity objects, the data, currently stored in the one or more cache entity objects and corresponding to the storage identifiers, with the first-type network data or the second-type network data, or cover, after the data corresponding to the storage identifiers are called back, the data, corresponding to the storage identifiers, with the first-type network data or the second-type network data.

In an example embodiment, the setting component comprises: a traversing element, configured to traverse all of storage identifiers already existing in the one or more cache entity objects; and a determining element, configured to determine the storage identifiers set for the first-type network data or the second-type network data according to a traversing result, wherein the set storage identifiers are different from all of the storage identifiers which already exist.

By means of the disclosure, the request message is initiated to the network side device, and the network data to be cached are acquired; and the one or more cache entity objects are selected for the network data from the cache entity object set, and the acquired first-type network data are directly stored into the one or more cache entity objects, or, the serialized second-type network data are stored into the one or more cache entity objects. The network data of different types received from the network side device are stored by the constructed cache entity object set, repeated initiation of requests for acquiring the same network data to the network side device is reduced, the frequency of information interaction with the network side device is reduced, and therefore the problems that the data cache solutions provided in the relevant art are overly dependent on the remote network service and the traffic of the network and the electric quantity of the mobile terminal need to be greatly consumed are solved; and furthermore, dependence on the network can be reduced, and the traffic of the network and the electric quantity of the mobile terminal can be saved.

### Brief Description of the Drawings

Drawings, provided for further understanding of the disclosure and forming a part of the specification, are used to explain the disclosure together with embodiments of the disclosure rather than to limit the disclosure, wherein:
Fig. 1 is a method of storing data according to an embodiment of the disclosure;
Fig. 2 is a schematic diagram of android platform cache management according to an example embodiment of the disclosure;
Fig. 3 is a structural diagram of a device for storing data according to an embodiment of the disclosure; and
Fig. 4 is a structural diagram of a device for storing data according to an example embodiment of the disclosure.

### Detailed Description of the Embodiments

The disclosure is described below with reference to the accompanying drawings and embodiments in detail. Note that, the embodiments of the disclosure and the features of the embodiments may be combined with each other if there is no conflict.

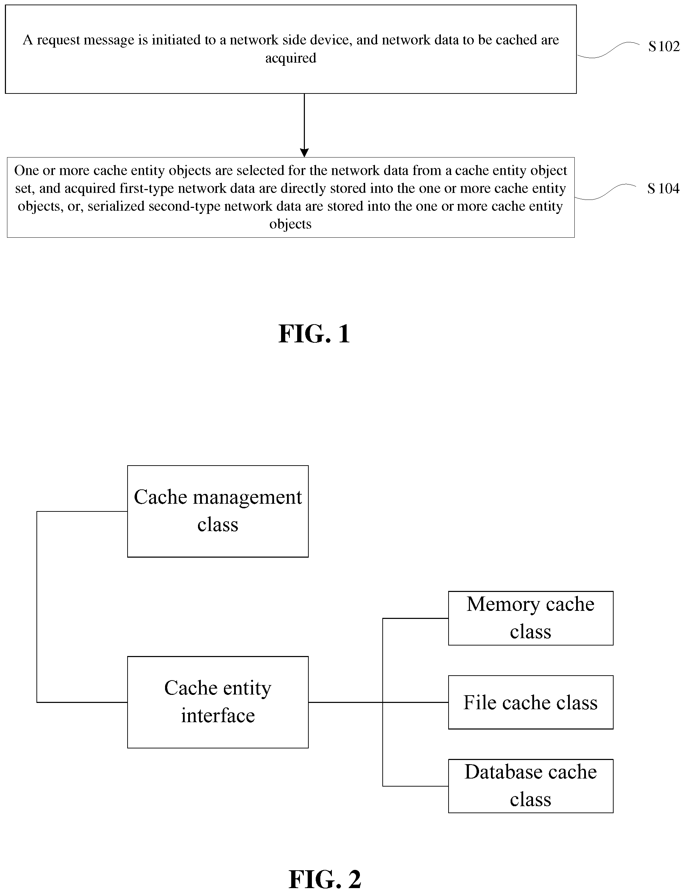

Fig. 1 is a method for storing data according to an embodiment of the disclosure. As shown in Fig. 1, the method may include the following processing steps that:
Step S102: a request message is initiated to a network side device, and network data to be cached are acquired; and
Step S104: one or more cache entity objects are selected for the network data from a cache entity object set, and acquired first-type network data are directly stored into the one or more cache entity objects, or, serialized second-type network data are stored into the one or more cache entity objects.

Data cache solutions provided in the related art are overly dependent on remote network service, and traffic of a network and electric quantity of mobile terminals need to be greatly consumed. According to the method as shown in Fig. 1, the request message is initiated to the network side device, and the network data to be cached (such as picture data and character string data) are acquired; and the one or more cache entity objects are selected for the network data from the cache entity object set, and the acquired first-type network data are directly stored into the one or more cache entity objects, or, the serialized second-type network data are stored into the one or more cache entity objects. The network data of different types received from the network side device are stored by the constructed cache entity object set, repeated initiation of requests for acquiring the same network data to the network side device is reduced, a frequency of information interaction with the network side device is reduced, and therefore the problems that the data cache solutions provided in the related art are overly dependent on the remote network service and the traffic of the network and the electric quantity of the mobile terminals need to be greatly consumed are solved; and furthermore, dependence on the network can be reduced, and the traffic of the network and the electric quantity of the mobile terminals can be saved.

It needs to be noted that the network data stored in the one or more selected cache entity objects can be divided into two types:
a first type: a basic data type and a self-serialized data type such as int, float and character string data, wherein the first-type network data can be directly stored without serialization; and
a second type: a structural type or a picture type, wherein the second-type network data can be stored only after being serialized.

In an example implementing process, the cache entity object set may include, but not limited to, at least one of the following cache entity objects:
(1) one or more initially-configured memory cache entity objects;
(2) one or more initially-configured file cache entity objects;
(3) one or more initially-configured database cache entity objects; and
(4) one or more customized extended cache entity objects.

In an example embodiment, the cache entity object set implements a backup/cache component, and constructs a framework to store network data of different types in an unified manner; initial configurations of the cache entity object set based on a cache abstract class have achieved three basic cache classes namely data caching taking a file as a storage carrier, data caching taking a memory as a storage carrier and data caching taking a database as a storage carrier; and meanwhile, a user can define own caching via an abstract class interface according to own requirements or can continuously extend the three cache modes which have been achieved to meet diversity in a practical application process. On the basis of the two functions, the user can also use cache functions via packaged cache management class objects.

A method for implementing android platform cache management is further described below with reference to Fig. 2 in detail by taking a cache management component of an android platform as an example. Fig. 2 is a schematic diagram of android platform cache management according to an example embodiment of the disclosure. As shown in Fig. 2, the android platform cache management is as follows:
(1) a cache management class supports generic data and can eliminate data according to the LRU rule.
   The cache management class can provide the following functions:
   1, removing all data in a cache of a current type;
   2, obtaining V values of all the data in the cache of the current type according to K, wherein the K is a data type of a key, an android platform Java grammar supports generic declarations, the V is a data type of a value, and the android platform Java grammar supports the generic declarations;
   3, (K-V) data corresponding to a cache is stored into the cache;
   4, (K-V) data corresponding to a cache is removed from the cache;
   5, a size of a cache is acquired; and
   6, a maximum limit of a cache is acquired.

   In an example embodiment, cache management supports generic key-value, and can perform setting according to practical situations. File caching and database caching implemented by the cache management component are of a <String, Externalizable> type, and any serializable files or data can be cached.
(2) a cache entity interface supports the generic data and implements data access.
   A cache entity abstract class provides the following classes of interfaces:
   a first class of interfaces, acquiring (K-V) data which are not accessed since a longest time in a cache so as to delete the acquired (K-V) data when data will overflow out of the cache;
   a second class of interfaces, obtaining corresponding VALUE in the cache according to KEY;
   a third class of interfaces, storing data into the cache according to the KEY, and, when data corresponding to the KEY already exist in the cache, returning a V value corresponding to the existed data;
   a fourth class of interfaces, deleting corresponding data in the cache according to the KEY;
   a fifth class of interfaces, acquiring a maximum limit value of the cache;
   a sixth class of interfaces, acquiring size/quantity of data which have been cached; and
   a seventh class of interfaces, traversing to obtain one or more SET objects of the KEY.
(3) a memory cache class supports the generic data and implements access of data objects in a memory.
(4) a file cache class only supports <String, Externalizable>-type data, and implements access of the data objects in a file mode.
(5) a database cache class only supports the <String, Externalizable>-type data, and implements access of the data objects in a database mode.
(6) a function of an Externalizable supports serializable value object data type and the function is completed by an Externalizable interface under the android platform.

In an example embodiment, in Step S104, before the first-type network data is stored into the one or more cache entity objects, the method may further include the following steps that:
Step S 1: size of the first-type network data is acquired;
Step S2: whether the size of the first-type network data is smaller than or equal to a size of a remaining storage space in the first cache entity object is judged, wherein the first cache entity object has a highest storage priority among the one or more cache entity object; and
Step S3: if the size of the first-type network data is bigger than the size of the remaining storage space in the first cache entity object, part or all of data currently stored in the first cache entity object are deleted or part or all of the data currently stored in the first cache entity object are transferred to another cache entity object or other cache entity objects except for the first cache entity object according to a preset rule, wherein the preset rule may include, but not limited to, one of the followings: an LRU rule, time of data stored in the first cache entity objects.

In an example embodiment, when the network data (such as the character string data) are received from the network side device, it is determined that the network data of this type can be directly stored as VALUE values without serialization. The one or more cache entity objects need to be selected for the network data from the cache entity object set, and a maximum capacity limit of each cache entity object can be assigned. The cache entity objects herein can be the memory cache entity objects, the file cache entity objects or the database cache entity objects which have been configured, and can be, certainly, the customized extended cache entity objects. In a storage process of the network data, a storage policy (such as priorities of the cache entity objects) can be preset, and in this example embodiment, a priority of the memory cache entity objects, a priority of the file cache entity objects and a priority of the database cache entity objects can be set to decrease gradually. Then, it starts to judge whether a current storage capacity of the memory cache entity objects with highest priority accords with the network data which are just received, and if so, the received network data are directly stored into the memory cache entity objects. If the current storage capacity of the memory cache entity objects cannot accord with the network data which are just received, aged data which are not used recently can be stored into the file cache entity objects or the database cache entity objects according to a preset rule (for instance, eliminating the aged data which are not used recently in the memory cache entity objects), and the network data which are just received are stored into the memory cache entity objects, so that data caching can be flexibly performed in order not to affect performances and experiences of applications. Certainly, in order not to affect a processing ability of a terminal side device, the memory cache entity objects are prevented from being overused. Thus, even if the current storage capacity of the memory cache entity objects can accord with the network data which are just received, a usage rate of the memory cache entity objects has exceed a preset proportion (for instance, 80 percent) after the network data are stored, and the aged data which are not used recently need to be stored into the file cache entity objects or the database cache entity objects according to the preset rule (for instance, eliminating the aged data which are not used recently in the memory cache entity objects).

If the same character string data need to be shown in a re-access process of a network page after caching, a request does not need to be initiated to the network side device for data interaction, and the corresponding character string data can be directly obtained from the memory cache entity object for showing instead, thereby reducing the traffic of the network, increasing a page showing speed and improving the user experiences.

In an example embodiment, in Step S104, before the second-type network data are stored into the one or more cache entity objects, the method may further include the following steps that:
Step S4: a size of the second-type network data is acquired;
Step S5: whether the size of the second-type network data is smaller than or equal to the size of the remaining storage space in the first cache entity object is judged; and
Step S6: if the size of the second-type network data is bigger than the size of the remaining storage space in the first cache entity object, part or all of the data currently stored in the first cache entity object are deleted or part or all of the data stored in the first cache entity object are transferred to another cache entity object or other cache entity objects except for the first cache entity object according to the preset rule, wherein the preset rule may include, not limited to, one of the followings: the LRU rule, the time of storage in the first cache entity objects.

In an example embodiment, when the network data (such as the picture data) are received from the network side device, it is determined that the network data of this type need to be serialized. Firstly, the network data of this type can be stored as VALUE values after being serialized. After serialization preparation is completed, the data can be cached by using the cache management component. Secondly, the one or more cache entity objects need to be selected for the network data from the cache entity object set, and the maximum capacity limit of each cache entity object can be assigned. The cache entity objects herein can be the memory cache entity objects, the file cache entity objects or the database cache entity objects which have been configured, and can be, certainly, the customized extended cache entity objects. In the storage process of the network data, the storage policy (such as priorities of the cache entity objects) can be preset, and in this example embodiment, a priority of the memory cache entity objects, a priority of the file cache entity objects and a priority of the database cache entity objects can be set to decrease gradually. Then, it starts to judge whether the current storage capacity of the memory cache entity objects with highest priority accords with the network data which are just received, and if so, the received network data are directly stored into the memory cache entity objects. If the current storage capacity of the memory cache entity objects cannot accord with the network data which are just received, the aged data which are not used recently can be stored into the file cache entity objects or the database cache entity objects according to the preset rule (for instance, eliminating the aged data which are not used recently in the memory cache entity objects), and the network data which are just received are stored into the memory cache entity objects, so that data caching can be flexibly performed in order not to affect the performances and experiences of the applications. Certainly, in order not to affect the processing ability of the terminal side device, the memory cache entity objects are prevented from being overused. Thus, even if the current storage capacity of the memory cache entity objects can accord with the network data which are just received, the usage rate of the memory cache entity objects has exceed the preset proportion (for instance, 80 percent) after the network data are stored, and the aged data which are not used recently need to be stored into the file cache entity objects or the database cache entity objects according to the preset rule (for instance, eliminating the aged data which are not used recently in the memory cache entity objects).

If the same picture data need to be shown in the re-access process of the network page after caching, the request does not need to be initiated to the network side device for data interaction, and the corresponding picture data can be directly obtained from the memory cache entity object for showing instead, thereby reducing the traffic of the network, increasing the page showing speed and improving the user experiences.

In an example embodiment, in Step S104, before the first-type network data is stored into the one or more cache entity objects or the second-type network data is stored into the one or more cache entity objects, the method may further include the following steps that:
Step S7: storage identifiers are set for the first-type network data or the second-type network data, wherein the storage identifiers are configured to search for the first-type network data after the first-type network data is stored into the one or more cache entity objects or search for the second-type network data after the second-type network data is stored into the one or more cache entity objects.

In an example embodiment, storage identifiers KEYs can be set for the network data which are received at each time, the network data serves as VALUEs, and corresponding relationships between the KEYs and the VALUEs are established. And the network data is stored into the one or more cache entity objects, thereby being capable of subsequently searching for the stored network data via the KEYs. If it is necessary to search for the network data stored at a certain time subsequently, the corresponding data can be directly found via KEY values by using a cached data acquisition function under the condition that the KEYs are known. If the KEYs are unknown, all the KEYs can be found by traversal via a KEY set acquisition function of the cache management class, and then inquiry can be performed after one or more needed KEY values are found.

In an example embodiment, in Step S104, the step that the first-type network data is stored into the one or more cache entity objects or the second-type network data is stored into the one or more cache entity objects may include the following steps that:
Step S8: whether the storage identifiers already exist in the one or more cache entity objects is judged; and
Step S9: if the storage identifiers already exist in the one or more cache entity objects, the data, currently stored in the one or more cache entity objects and corresponding to the storage identifiers, are directly covered with the first-type network data or the second-type network data, or after the data corresponding to the storage identifiers are called back, the data, corresponding to the storage identifiers, are covered with the first-type network data or the second-type network data.

In an example embodiment, according to the type of the network data, if the network data are the character string data, the network data can be directly stored as the VALUEs without serialization; and if the network data are the picture data, the network data of this type need to be serialized, and therefore the network data can be stored as the VALUEs. In the storage process, the network data are distinguished via the storage identifiers KEYs. When the network data are stored, the storage identifiers KEYs allocated for the network data are not unique, namely identifiers identical to the storage identifiers KEYs allocated for the network data which are just received are more likely to already exist in the cache entity objects. At this moment, if data corresponding to the KEYs exist in the cache entity objects, old data will be directly covered with new data in the storage process, certainly, the covered old data can be returned to the user via a call-back interface, and the user can set whether it is necessary to call back the old data according to personal requirements specifically.

In an example embodiment, in Step S7, the step that the storage identifiers are set for the first-type network data or the second-type network data may include the following steps that:
Step S10: all of the storage identifiers already existing in the one or more cache entity objects are traversed; and
Step S11: storage identifiers set for the first-type network data or the second-type network data are determined according to a traversing result, wherein the set storage identifiers are different from all of the storage identifiers which already exist.

In an example embodiment, in order to avoid increase of searching complexity and complicacy of the network data in the one or more cache entity objects and in order to also avoid data loss caused by mis-operation due to data coverage because of the same storage identifiers, the storage identifiers which already exist in each cache entity object can be traversed first before the storage identifiers are set, and then one storage identifier different from all the storage identifiers which already exist currently is set.

As an example embodiment of the disclosure, a processing flowchart of caching by using an android platform caching tool may include the following processing steps that:
Firstly, the cached data type is serialized to implement an Externalizable interface;
Secondly, the cache management class is instantiated, a cache policy namely memories, files or databases is assigned, and the maximum limit of the cache can be optionally assigned;
Thirdly, the storage identifiers KEYs and the serialized data are assigned, and a corresponding cache function of the cache management class is used;
Fourthly, legalities of the KEYs and the VALUEs are determined to be not null;
Fifthly, the size of data to be stored is computed, so as to ensure that the size of the data is smaller than or equal to the maximum limit of the cache;
Sixthly, whether the identifiers KEYs already exist in the cache is judged, if so, newly-generated VALUEs will cover original values and are stored, moreover, whether there is an enough storage space for storing data to be cached is judged according to the assigned cache policy, and if not, the aged data need to be deleted first;

In an example embodiment, a judgment mode of the aged data is as follows: LinkedHashMap in a memory cache mechanism can be stored according to a time sequence, so that forefront data is the aged data. In a file cache mechanism, in addition to KEY file names, a database also stores creation time of corresponding files, so that the aged data can be judged according to the time. A database cache mechanism is similar to the file cache mechanism, a time field will be stored during data storage, and aged time can be obtained by inquiring the time field;
Seventhly, the K-V value is written into the cache, the LinkedHashMap arranged in an access sequence has been constructed in the memory cache mechanism, and storing data means adding of a mapping entry; the file cache mechanism can store relevant information for file caching by utilizing the database, a corresponding file name is generated first according to the KEY when certain data need to be stored, and then the data are written into the file; and meanwhile, the database is updated, and the database cache mechanism newly adds an entry to the database;
Eighthly, if data of which the KEYS already exist is cached, an old K-V value is returned by call-back; and

When the data are acquired by using the android platform caching tool, the corresponding data can be directly found via the KEY values by using the cached data acquisition function under the condition that the KEYs are known. If the KEYs are unknown, all the KEYs can be found by traversal via the KEY set acquisition function of the cache management class, and then inquiry can be performed after the needed KEY value is found.

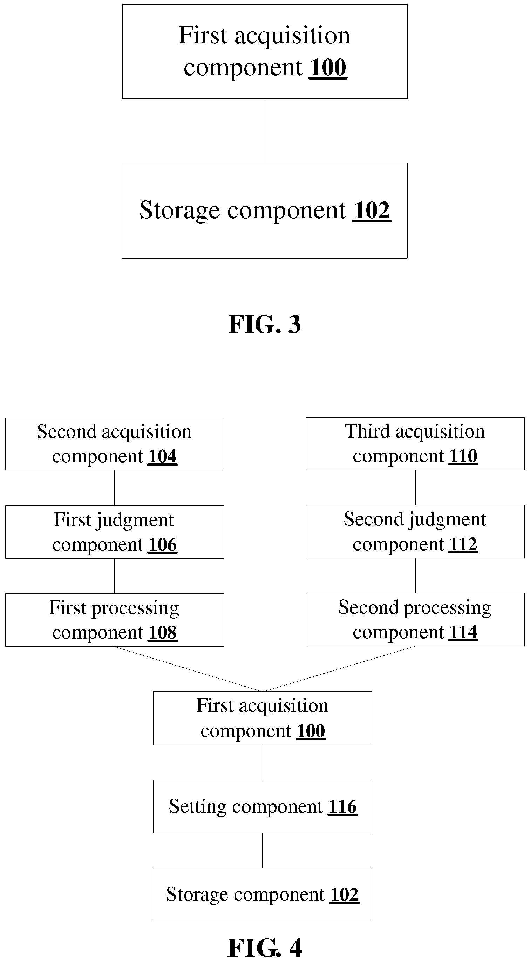

Fig. 3 is a structural diagram of a device for storing data according to an embodiment of the disclosure. As shown in Fig. 3, the device for storing data may include: a first acquisition component 100, configured to initiate a request message to a network side device and acquire network data to be cached; and a storage component 102, configured to select one or more cache entity objects for the network data from a cache entity object set, and directly store acquired first-type network data into the one or more cache entity objects or store serialized second-type network data into the one or more cache entity objects.

By adopting the device as shown in Fig. 3, the problems that the data cache solutions provided in the related art are overly dependent on the remote network service and the traffic of the network and the electric quantity of the mobile terminal need to be greatly consumed are solved; and furthermore, dependence on the network can be reduced, and the traffic of the network and the electric quantity of the mobile terminal can be saved.

In an example embodiment, as shown in Fig. 4, the device may include: a second acquisition component 104, configured to acquire a size of the first-type network data; a first judgment component 106, configured to judge whether the size of the first-type network data is smaller than or equal to a size of a remaining storage space in a first cache entity object, wherein the first cache entity object has a highest storage priority among the one or more cache entity object; and a first processing component 108, configured to delete, when the size of the first-type network data is bigger than the size of the remaining storage space in the first cache entity object, part or all of data currently stored in the first cache entity object or transfer part or all of the data currently stored in the first cache entity object to another cache entity object or other cache entity objects except for the first cache entity object according to a preset rule, wherein the preset rule may include, but not limited to, one of the followings: an LRU rule, time of data stored in the first cache entity objects.

In an example embodiment, as shown in Fig. 4, the device may include: a third acquisition component 110, configured to acquire sizes of the second-type network data; a second judgment component 112, configured to judge whether a size of the second-type network data is smaller than or equal to a size of a remaining storage space in a first cache entity object; and a second processing component 114, configured to delete, when the size of the second-type network data is bigger than the size of the remaining storage space in the first cache entity object, part or all of data currently stored in the first cache entity object or transfer part or all of data stored in the first cache entity object to another cache entity object or other cache entity objects except for the first cache entity object according to a preset rule, wherein the preset rule may include, but not limited to, one of the followings: an LRU rule, the time of data stored in the first cache entity objects.

In an example embodiment, as shown in Fig. 4, the device may include: a setting component 116, configured to set storage identifiers for the first-type network data or the second-type network data, wherein the storage identifiers are configured to search for the first-type network data after the first-type network data is stored into the one or more cache entity objects or search for second-type network data after the second-type network data is stored into the one or more cache entity objects.

In an example embodiment, the storage component 102 may include: a judgment element (not shown in Fig. 3), configured to judge whether the storage identifiers already exist in the one or more cache entity objects; and a processing element (not shown in Fig. 3), configured to directly cover, when the data with the storage identifiers already exists in the one or more cache entity objects, the data, currently stored in the one or more cache entity objects and corresponding to the storage identifiers, with the first-type network data or the second-type network data, or cover, after the data corresponding to the storage identifiers are called back, the data, corresponding to the storage identifiers, with the first-type network data or the second-type network data.

In an example embodiment, the setting component 116 may include: a traversing element (not shown in Fig. 3), configured to traverse all of storage identifiers already existing in the one or more cache entity objects; and a determining element (not shown in Fig. 3), configured to determine the storage identifiers set for the first-type network data or the second-type network data according to a traversing result, wherein the set storage identifiers are different from all of the storage identifiers which already exist.

From the above description, it can be seen that the embodiments implement the following technical effects (it is important to note that these effects are achievable effects of certain example embodiments): by adopting the technical solutions provided by the disclosure, local network data caching is implemented, when there are a large number of frequent requests for local application programs and requirements for various resources, the processing performance of the mobile terminal is greatly improved by utilizing a cache component, and the requests initiated to the network can be reduced. According to the disclosure, on the basis of constructing three basic cache classes namely a memory cache class, a file cache class and a database cache class, the extended usage of other cache systems is also reserved, caching of a network picture is supported, backup contents are not limited, and information downloaded from the network, such as any data, files and pictures can be backed up.

Obviously, those skilled in the art should know that each of the mentioned components or steps of the disclosure may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the disclosure is not restricted to any particular hardware and software combination.

The descriptions above are only the preferable embodiment of the disclosure, which are not used to restrict the disclosure, for those skilled in the art, the disclosure may have various changes and variations. Any amendments, equivalent substitutions, improvements, etc. within the principle of the disclosure are all included in the scope of the protection of the disclosure.

## Claims

1. A method for storing data, comprising:
initiating a request message to a network side device, and acquiring network data to be cached; and
selecting one or more cache entity objects for the network data from a cache entity object set, and directly storing acquired first-type network data into the one or more cache entity objects, or, storing serialized second-type network data into the one or more cache entity objects.

2. The method as claimed in claim 1, wherein before storing the first-type network data into the one or more cache entity objects, the method further comprises:
acquiring a size of the first-type network data;
judging whether the size of the first-type network data is smaller than or equal to a size of a remaining storage space in a first cache entity object, wherein the first cache entity object has a highest storage priority among the one or more cache entity object; and
when the size of the first-type network data is bigger than the size of the remaining storage space in the first cache entity object, deleting part or all of data currently stored in the first cache entity object or transferring part or all of data currently stored in the first cache entity object to another cache entity object or other cache entity objects except for the first cache entity object according to a preset rule, wherein the preset rule comprises one of the followings: a Least Recently Used, LRU, rule, time of data stored in the first cache entity objects.

3. The method as claimed in claim 1, wherein before storing the second-type network data into the one or more cache entity objects, the method further comprises:
acquiring a size of the second-type network data;
judging whether the size of the second-type network data is smaller than or equal to a size of a remaining storage space in a first cache entity object; and
when the size of the second-type network data is bigger than the size of the remaining storage space in the first cache entity object, deleting part or all of data currently stored in the first cache entity object or transferring part or all of data stored in the first cache entity object to another cache entity object or other cache entity objects except for the first cache entity object according to a preset rule,, wherein the preset rule comprises one of the followings: an LRU rule, time of data stored in the first cache entity objects.

4. The method as claimed in claim 1, wherein before storing the first-type network data into the one or more cache entity objects or storing the second-type network data into the one or more cache entity objects, the method further comprises:
setting storage identifiers for first-type network data or second-type network data, wherein the storage identifiers are used for searching for first-type network data after the first-type network data is stored into the one or more cache entity objects or searching for second-type network data after the second-type network data is stored into the one or more cache entity objects.

5. The method as claimed in claim 4, wherein storing the first-type network data into the one or more cache entity objects or storing the second-type network data into the one or more cache entity objects comprises:
judging whether the storage identifiers already exist in the one or more cache entity objects; and
when the data with the storage identifiers already exists in the one or more cache entity objects, directly covering data, currently stored in the one or more cache entity objects and corresponding to the storage identifiers, with the first-type network data or the second-type network data, or after the data corresponding to the storage identifiers are called back, covering the data, corresponding to the storage identifiers, with the first-type network data or the second-type network data.

6. The method as claimed in claim 4, wherein setting the storage identifiers for the first-type network data or the second-type network data comprises:
traversing all of storage identifiers already existing in the one or more cache entity objects; and
determining the storage identifiers set for the first-type network data or the second-type network data according to a traversing result, wherein the set storage identifiers are different from all of the storage identifiers which already exist.

7. The method as claimed in any one of claims 1 to 6, wherein the cache entity object set comprises at least one of the following:
one or more initially-configured memory cache entity objects;
one or more initially-configured file cache entity objects;
one or more initially-configured database cache entity objects; and
one or more customize extended cache entity objects.

8. A device for storing data, comprising:
a first acquisition component, configured to initiate a request message to a network side device and acquire network data to be cached; and
a storage component, configured to select one or more cache entity objects for the network data from a cache entity object set, and directly store acquired first-type network data into the one or more cache entity objects or store serialized second-type network data into the one or more cache entity objects.

9. The device as claimed in claim 8, wherein the device further comprises:
a second acquisition component, configured to acquire a size of the first-type network data;
a first judgment component, configured to judge whether the size of the first-type network data is smaller than or equal to a size of a remaining storage space in a first cache entity object, wherein the first cache entity object has a highest storage priority among the one or more cache entity object; and
a first processing component, configured to delete, when the size of the first-type network data is bigger than the size of the remaining storage space in the first cache entity object, part or all of data currently stored in the first cache entity object or transfer part or all of the data currently stored in the first cache entity object to another cache entity object or other cache entity objects except for the first cache entity object according to a preset rule, wherein the preset rule comprises one of the followings: a Least Recently Used, LRU, rule, time of data stored in the first cache entity objects.

10. The device as claimed in claim 8, wherein the device further comprises:
a third acquisition component, configured to acquire a size of the second-type network data;
a second judgment component, configured to judge whether the size of the second-type network data is smaller than or equal to a size of a remaining storage space in a first cache entity object; and
a second processing component, configured to delete, when the size of the second-type network data is bigger than the size of the remaining storage space in the first cache entity object, part or all of data currently stored in the first cache entity object or transfer part or all of data stored in the first cache entity object to another cache entity object or other cache entity objects except for the first cache entity object according to a preset rule, wherein the preset rule comprises one of the followings: an LRU rule, time of data stored in the first cache entity objects.

11. The device as claimed in claim 8, wherein the device further comprises:
a setting component, configured to set storage identifiers for the first-type network data or the second-type network data, wherein the storage identifiers are configured to search for the first-type network data after the first-type network data is stored into the one or more cache entity objects or search for second-type network data after the second-type network data is stored into the one or more cache entity objects.

12. The device as claimed in claim 11, wherein the storage component comprises:
a judgment element, configured to judge whether the storage identifiers already exist in the one or more cache entity objects; and
a processing element, configured to directly cover, when the data with the storage identifiers already exists in the one or more cache entity objects, the data, currently stored in the one or more cache entity objects and corresponding to the storage identifiers, with the first-type network data or the second-type network data, or cover, after the data corresponding to the storage identifiers are called back, the data, corresponding to the storage identifiers, with the first-type network data or the second-type network data.

13. The device as claimed in claim 11, wherein the setting component comprises:
a traversing element, configured to traverse all of storage identifiers already existing in the one or more cache entity objects; and
a determining element, configured to determine the storage identifiers set for the first-type network data or the second-type network data according to a traversing result, wherein the set storage identifiers are different from all of the storage identifiers which already exist.
